# EUROPÄISCHE PATENTANMELDUNG

(11) **EP 2 322 816 A1**
(43) Veröffentlichungstag der Anmeldung: **18.05.2011**
(21) Anmeldenummer: 09306105.9
(22) Anmeldetag: 17.11.2009
(51) Int. Cl.: F16B 31/02, H01R 4/36

(54) **Klemmschraube**

(71) Anmelder: Nexans, 75008 Paris (FR)
(72) Erfinder: Zapf, Martin, 95473, Creußen (DE); Dr. Stauch, Gert, 95032, Hof (DE); Grötsch, Peter, 95111, Rehau (DE)
(74) Vertreter: Döring, Roger

(57) **Zusammenfassung**

Es wird eine Klemmschraube zum Befestigen eine selektrischen Leitersin eine rals Rohrstückausgeführten metallischen Klemme angegeben. Sie besteht aus einem zylindrischen, mit eineim Auße ng e winde (9) verse he ne n, in e in Durchgangslo*ch der Klemme ein schraubbaren Kontaktteil (7) und einem haubenartigen, mit einem Innenge winde (16) versehenen Betätigungsteil (8), das in Montageposition auf das Kontaktteil (7) aufgeschraubt ist und eine Anla g e flä c he fürein Werkzeug hat. Das Kontaktteil (7) ist als Hohlkörper mit einer zur Anlage an einem in der Klemme befindlichen elektrischen Leiter bestimmten Stirnfläche (10) ausgeführt, in dem mindestens eine querzus einer Achsrichtung verlaufende und rund um mit seiner Wandung (12) verbundene Scheibe (11) angeordnet ist, in welcher eine zur Begrenzung deraufdie Klemmschraube (2) ausgeübten Kraftdienende Sollbruchstelle angebracht ist, welche als konzentrisch zur Achse des Kontaktteils (7) umlaufende Rille (14) ausgebildet ist. In dem Betätigungsteil (8) ist zentralein dornartiges Druckstück (17) angebracht, das unter Einse hluß eines umlaufenden Luftspalts (18) etwa konzentrisch zur Wandung des Betätigungsteils (8) verläuft und in Montage position in Richtung des Kontaktteils (7) weist. Das Kontaktteil (7) hat eine definierte, in Abhängigkeit von der mittels des Werkzeugs aufzubringenden Kraft bemessene Wandstärke, die zur Erzeugung des Festsitzes der Schraube (2) in der Klemme erforderlich ist und nach Erreichen des Festsitzes zum Abreißendes Kontaktteils (7) durch das Betätigungsteil (8) führt.

## Beschreibung

Die Erfindung bezieht sich auf eine Klemmschraube zum Befestigen eines elektrischen Leiters in einer als Rohrstück ausgeführten metallischen Klemme, welche in ihrer Wandung mindestens ein mit einem Gewinde versehenes Durchgangsloch zur Aufnahme der Klemmschraube hat, die in ihrem Aufbau mindestens eine Sollbruchstelle zur Begrenzung der Kraft aufweist, welche mittels eines an der Klemmschraube angreifenden, eine Drehung um ihre Achse bewirkenden Werkzeugs auf dieselbe ausgeübt wird (EP 0 750 723 B1).

Eine derartige, auch als "Abreißschraube" bzw. "Abscherschraube" bezeichnete Klemmschraube - im folgenden kurz "Schraube" genannt - wird beispielsweise in der Starkstromtechnik zum Verbinden der elektrischen Leiter zweier Starkstromkabel eingesetzt. Zur Erzielung und Aufrechterhaltung eines elektrisch gut leitenden Kontakts, ist eine feste Verbindung zwischen den Leitern zweier Kabel und einer rohrförmigen metallischen Klemme erforderlich, in welche die Leiter eingesteckt sind. Das könnte durch Verwendung eines sogenannten Drehmomentschlüssels sichergestellt werden, der beim Anziehen der Schraube dann "durchdreht", wenn ein ausreichender Festsitz derselben erreicht ist. So ein Drehmomentschlüssel steht aber auf einer Baustelle oft nicht zur Verfügung. Die Schraube wird daher in der Regel mit einem anderen Werkzeug festgedreht, beispielsweise mit einem einfachen Schraubenschlüssel. Um sicherzustellen und auch um überprüfen zu können, daß die Schraube ausreichend fest angezogen ist, kann sie als Abscherschraube mit mindestens einer Sollbruchstelle ausgerüstet sein, die in ihrem axialen Verlauf als umlaufende Nut angeordnet ist. Der obere Teil der Schraube wird dann abgeschert, wenn die Festigkeit ihrer Sollbruchstelle erreicht ist bzw. überschritten wird. Der dann fehlende Schraubenkopf ist ein Indiz dafür, daß die Schraube ausreichend fest angezogen ist. Die Schraube ragt nach dem Abscheren des Schraubenkopfes nicht oder nur unwesentlich aus der Klemme heraus. Ein über derselben zu montierendes Isolierelement wird daher weder mechanisch beschädigt, noch in seinen Isoliereigenschaften beeinträchtigt. Die Sollbruchstelle unterbricht aber das Gewinde der Schraube, so daß dessen Tragfähigkeit geschwächt wird. Das macht sich umso mehr ungünstig bemerkbar, je mehr derartige Sollbruchstellen bei einer Schraube vorhanden sind. Ein universeller Einsatz solcher Schrauben für Leiter unterschiedlichster Durchmesser ist daher oft nicht möglich.

Die Schraube nach der eingangs erwähnten EP 0 750 723 B1 weist in ihrem Verlauf mehrere, als umlaufende Nuten ausgebildete Sollbruchstellen auf, die parallel und mit axialem Abstand zueinander im Gewindeteil der Schraube angeordnet sind. Die Schraube ist außerdem mit einem zentralen Sackloch mit polygonalem Querschnitt ausgerüstet, das bis in die Nähe der am nächsten zur Schraubenspitze liegenden Sollbruchstelle liegt. Zur Betätigung der Schraube ist ein Drehkörper vorgesehen, der aus einem zur Einführung in das Sackloch bestimmten Stift mit polygonalem Querschnitt und einer denselben mit Abstand rundum umgebenden Haube besteht, an welcher der Stift befestigt ist und die außen eine Sechskantmutter zum Anlegen eines Werkzeugs aufweist. Für diese bekannte Schraube gilt wegen der größeren Anzahl von Sollbruchstellen der bereits beschriebene Mangel der verminderten Tragfähigkeit in erhöhtem Maße.

Der Erfindung liegt die Aufgabe zugrunde, die eingangs geschilderte Schraube so zu gestalten, daß sie auf einfachere Art und Weise mit uneingeschränkter Tragfähigkeit zur festen Anlage an einem Leiter gebracht werden kann.

Diese Aufgabe wird gemäß der Erfindung dadurch gelöst,
- daß die Schraube aus einem zylindrischen, mit einem Außengewinde versehenen, in das Durchgangsloch einer Klemme einschraubbaren Kontaktteil und einem haubenartigen, mit einem Innengewinde versehenen Betätigungsteil besteht, das in Montageposition auf das Kontaktteil aufgeschraubt ist und eine Anlagefläche für das Werkzeug hat,
- daß das Kontaktteil als Hohlkörper mit einer zur Anlage an einem in der Klemme befindlichen elektrischen Leiter bestimmten Stirnfläche ausgeführt ist, in dem mindestens eine quer zu seiner Achsrichtung verlaufende und rundum mit seiner Wandung verbundene Scheibe angeordnet ist, in welcher die Sollbruchstelle angebracht ist, welche als konzentrisch zur Achse des Kontaktteils umlaufende Rille ausgebildet ist,
- daß in dem Betätigungsteil zentral ein dornartiges Druckstück angebracht ist, das unter Einschluß eines umlaufenden Luftspalts etwa konzentrisch zur Wandung des Betätigungsteils verläuft und in Montageposition in Richtung des Kontaktteils weist
   und
- daß das Kontaktteil eine definierte, in Abhängigkeit von der mittels des Werkzeugs aufzubringenden Kraft bemessene Wandstärke hat, die zur Erzeugung des Festsitzes der Schraube in der Klemme erforderlich ist und nach Erreichen des Festsitzes zum Abreißen des Kontaktteils durch das Betätigungsteil führt.

Diese Schraube hat ein zur Anlage an einem elektrischen Leiter bestimmtes Kontaktteil mit einem Außengewinde, das auf seiner ganzen axialen Höhe ohne Unterbrechung vorhanden ist. Die Tragfähigkeit des Außengewindes bleibt daher ohne Einschränkung bzw. Schwächung während der gesamten Betätigung der Schraube bei dem vorgegebenen Wert erhalten. Die Schraube wird mittels ihres Betätigungsteils, dessen Druckstück dabei an der Scheibe anliegt, solange im Gewindeloch der Klemme gedreht, bis die Sollbruchstelle in der Scheibe unter dem Druck des Druckstücks aufgerissen wird. Dieser Zeitpunkt entspricht der Kraft bzw. dem Drehmoment, die bzw. das bis zum Festsitz der Schraube am Leiter auf dieselbe ausgeübt wird. Danach wird das Betätigungsteil auf dem Kontaktteil weiter gedreht, bis es auf der Klemme aufliegt. Wenn es dann mit entsprechender Kraft weitergedreht wird, wird der aus der Klemme herausragende Teil des Kontaktteils abgetrennt bzw. abgerissen.

Das Kontaktteil der Schraube kann zwei oder mehr Scheiben mit Sollbruchstellen haben, die parallel und mit Abstand zueinander in demselben angeordnet sind. Die Festigkeit der Sollbruchstellen dieser Scheiben nimmt in Richtung der Stirnfläche des Kontaktteils zu. Die Schraube ist dann für unterschiedlich dimensionierte Leiter und unterschiedliche Anpreßdrücke einsetzbar.

Ausführungsbeispiele des Erfindungsgegenstandes sind in den Zeichnungen dargestellt.

Es zeigen:
Fig. 1 schematisch eine Verbindungsstelle zwischen den Leitern zweier elektrischer Kabel im Schnitt.
Fig. 2 die beiden Teile einer Klemmschraube nach der Erfindung voneinander getrennt.
Fig. 3 die Klemmschraube mit zusammengefügten Teilen.
Fig. 4 bis 8 unterschiedliche Positionen der Klemmschraube bei ihrer Betätigung.
Fig. 9 die Position der Klemmschraube nach Fig. 9 bei einem kleiner dimensionierten Leiter.
Fig. 10 eines der Teile der Klemmschraube nach den Fig. 2 und 3 in abgewandelter Ausführungsform.

Im folgenden wird weiter statt des Wortes "Klemmschraube" das kürzere Wort "Schraube" verwendet. Die Schraube besteht aus einem ausreichend festen, elektrisch gut leitenden Metall, vorzugsweise aus Messing oder einer Aluminiumlegierung. Das im Folgenden erwähnte Betätigungsteil der Schraube kann beispielsweise auch aus Stahl bestehen.

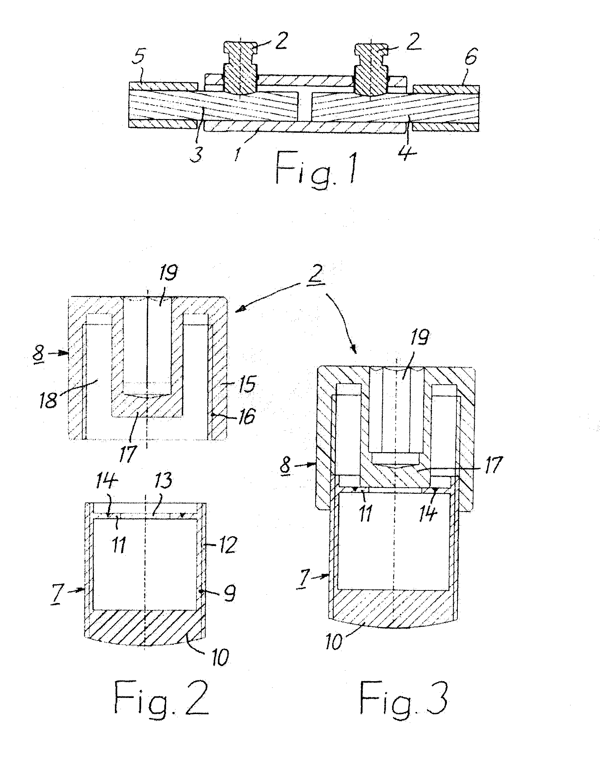

In Fig. 1 ist eine beispielsweise aus einer verzinnten Aluminiumlegierung bestehende, als Rohrstück ausgeführte Klemme 1 dargestellt. Die Klemme 1 hat zwei Gewindebohrungen, in denen jeweils eine mit einem Außengewinde versehene Schraube 2 angeordnet ist. In die Klemme 1 ragen von zwei unterschiedlichen Seiten her die elektrischen Leiter 3 und 4 zweier elektrischer Kabel 5 und 6 hinein, bei denen es sich insbesondere um Energiekabel handelt. Sie sind in Montageposition durch die Schrauben 2 in der Klemme 1 festgelegt und dadurch elektrisch leitend miteinander verbunden. Die elektrischen Leiter 3 und 4 sind in bevorzugter Ausführungsform als mehrdrähtige Leiter ausgeführt. Sie bestehen vorzugsweise aus Aluminium oder Kupfer. Die Leiter 3 und 4 können auch aus Segmenten aufgebaut sein, in denen jeweils Einzeldrähte zusammengefaßt sind.

Die Schraube 2 besteht aus zwei miteinander zu verschraubenden Teilen, einem Kontaktteil 7 und einem Betätigungsteil 8. Dabei kann das Betätigungsteil 8 auch aus zwei oder mehr Einzelteilen zusammengebaut sein.

Das Kontaktteil 7 ist als zylindrischer Hohlkörper mit einem auf seiner ganzen axialen Länge vorhandenen Außengewinde 9 ausgeführt. Es hat eine zur Anlage an einem elektrischen Leiter 3 bzw. 4 bestimmte Stirnfläche 10. Im Hohlraum des Kontaktteils 7 ist eine Scheibe 11 angebracht, die im rechten Winkel zu seiner Achse verläuft und umlaufend fest mit der Wandung 12 des Kontaktteils 7 verbunden ist. Sie ist mit Vorteil einstückig mit dem Kontaktteil 7 ausgeführt und dann mit einem zentralen Loch 13 versehen, durch welches die Herstellung in einstückiger Ausführung ermöglicht wird. Die Scheibe 11 kann aber auch als Vollscheibe nachträglich im Kontaktteil 7 befestigt werden. Sie ist in jeder Ausführungsform mit einer als Sollbruchstelle dienenden, umlaufenden Rille 14 ausgerüstet.

Das Betätigungsteil 8 ist als haubenartiger Hohlkörper ausgeführt, der innen an seiner Wandung 15 ein Innengewinde 16 hat, das auf der ganzen axialen Höhe des Hohlraums vorhanden ist. Zum Betätigungsteil 8 gehört ein dornartiges Druckstück 17, das einstückig mit dem Betätigungsteil verbunden ist. Es ist unter Einschluß eines umlaufenden Luftspalts 18 etwa konzentrisch zur Wandung 15 des Betätigungsteils 8 angebracht und weist in Richtung Kontaktteils 7, auf welches das Befestigungsteil 8 zum Fertigstellen der Schraube 2 aufgeschraubt wird. Das Außengewinde 9 des Kontaktteils 7 und das Innengewinde 16 des Betätigungsteils 8 sind entsprechend aufeinander abgestimmt.

Die radialen Abmessungen des Druckstücks 17 entsprechen dem Durchmesser der durch die Rille 14 erzeugten Sollbruchstelle. Diese Abmessungen sind mit Vorteil etwas kleiner als der Durchmesser der Rille 14, damit das Druckstück 17 nach dem Durchbrechen der Scheibe 11 durch dieselbe hindurchtreten kann. Im Druckstück 17 ist im dargestellten Ausführungsbeispiel ein nach außen offenes, in axialer Richtung verlaufendes Sackloch 19 mit polygonalem Querschnitt zur Aufnahme eines Werkzeugs angebracht, das zur Betätigung der Schraube 2 dient. Statt des Sacklochs 19 kann beispielsweise auch ein Sechskant am Betätigungsteil 8 angebracht sein, an dem ein entsprechendes Werkzeug eingreifen kann.

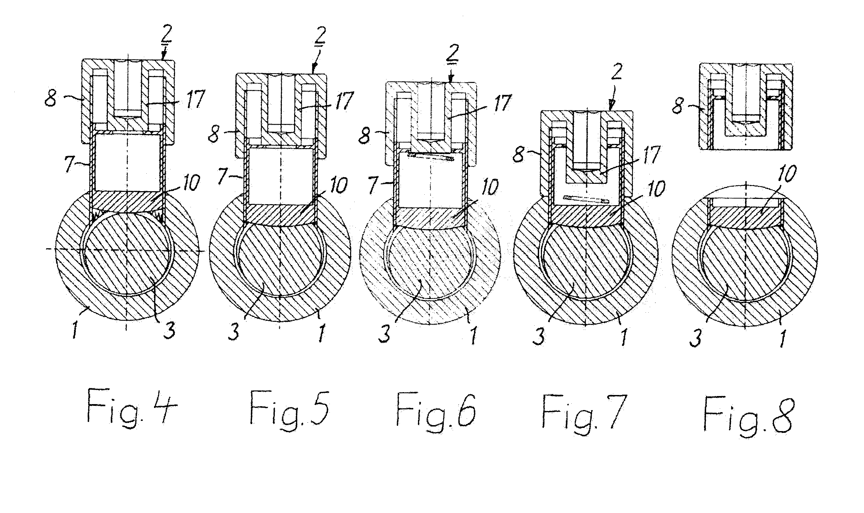

Die Schraube 2 geht im Montagezustand aus Fig. 2 hervor. Das Betätigungsteil 8 ist dabei soweit auf das Kontaktteil 7 aufgeschraubt, daß sein Druckstück 17 an der Scheibe 11 des Kontaktteils 7 anliegt. Die so fertiggestellte Schraube 2 wird entsprechend den Fig. 4 bis 8 beispielsweise wie folgt zum Befestigen eines elektrischen Leiters 3 in einer Klemme 1 gehandhabt:
Zunächst wird die Schraube 2 in ein Gewindeloch der Klemme 1 eingeschraubt, bis sie entsprechend Fig. 4 an dem elektrischen Leiter 3 anliegt. Beim weiteren Anziehen der Schraube 2 mittels eines in das Sackloch 19 eingeführten Werkzeugs wird der Leiter 3 zusammengedrückt (Fig. 5). Wenn die für den Festsitz der Schraube 2 in der Klemme 1 erforderliche Anpreßkraft erreicht ist oder überschritten wird, bricht das Druckstück 17 den inneren Teil der Scheibe 11 an der Sollbruchstelle 14 aus derselben heraus (Fig. 6). Beim Weiterdrehen des Betätigungsteils 8 kann damit das Druckstück 17 ungehinderf durch die Scheibe 11 hindurchtreten, während das Befestigungsteil 8 in Richtung der Klemme 1 auf dem nicht mehr mitgedrehten Kontaktteil 7 weitergedreht wird, bis es gemäß Fig. 7 auf der Klemme 1 aufliegt.

Wenn das Betätigungsteil 8 dann mit ausreichender Kraft weitergedreht wird, wird der aus der Klemme 1 herausragende Teil des Kontaktteils 7 abgetrennt (Fig. 8). Er kann zusammen mit dem Betätigungsteil 8 von der Klemme 1 abgehoben und anschließend aus demselben entfernt werden. Damit der aus der Klemme 1 herausragende Teil des Kontaktteils 7 im geschilderten Sinne abgetrennt werden kann, muß seine Wandstärke entsprechend bemessen sein. Die Wandstärke muß nur groß genug sein, damit das Kontaktteil 7 die für den Festsitz der Schraube 2 erforderliche Kraft übertragen kann. Eine größere Wandstärke ist jedoch nicht erforderlich. In diesem Sinne ist die Wandstärke des Kontaktteils 7 in Abhängigkeit von der Größe der erwähnten Kraft zu bemessen.

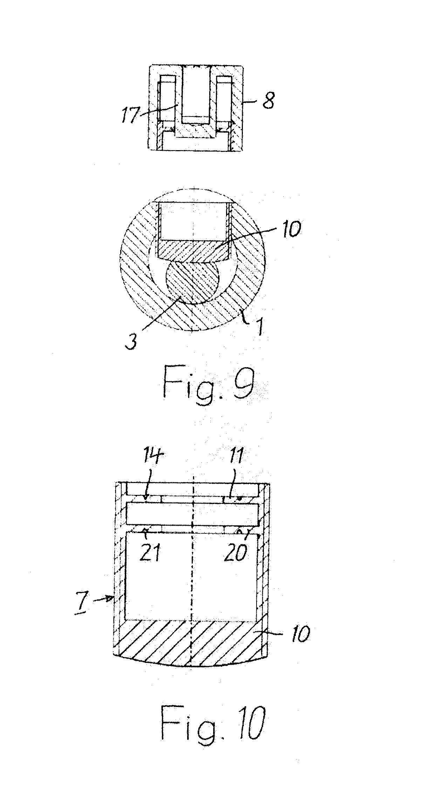

Die Schraube 2 ist ohne Änderungen für elektrische Leiter unterschiedlicher Durchmesser einsetzbar, weil sie ohne vorgegebene Sollbruchstellen in der Wandung des Kontaktteils 7 in jeder geeigneten Höhe abgetrennt werden kann. Das geht für einen gegenüber dem Leiter 3 nach den Fig. 4 bis 8 dünneren Leiter 3 aus Fig. 9 hervor.

Das Kontaktteil 7 kann gemäß Fig. 10 auch mit einer zweiten Scheibe 20 ausgerüstet ein, die parallel und mit Abstand zur Scheibe 11 im Hohlraum des Kontaktteils 7 angebracht ist. Auch die Scheibe 20 ist mit einer als umlaufende Rille 21 ausgeführten Sollbruchstelle versehen, deren Festigkeit höher als die der Sollbruchstelle der Scheibe 1 ist. Die Schraube 2 kann dann nach Durchbrechen der Scheibe 11 und Anlage des Druckstücks 17 an der Scheibe 20 fester angezogen werden, bis auch die Scheibe 20 an ihrer Sollbruchstelle durchbrochen wird. In diesem Sinne können auch mehr als zwei Scheiben mit Sollbruchstellen im Hohlraum des Kontaktteils 7 angebracht sein.

## Patentansprüche

1. Klemmschraube zum Befestigen eines elektrischen Leiters in einer als Rohrstück ausgeführten metallischen Klemme, welche in ihrer Wandung mindestens ein mit einem Gewinde versehenes Durchgangsloch zur Aufnahme der Klemmschraube hat, die in ihrem Aufbau mindestens eine Sollbruchstelle zur Begrenzung der Kraft aufweist, welche mittels eines an der Klemmschraube angreifenden, eine Drehung um ihre Achse bewirkenden Werkzeugs auf dieselbe ausgeübt wird, **dadurch gekennzeichnet,**
- **daß** die Klemmschraube (2) aus einem zylindrischen, mit einem Außengewinde (9) versehenen, in das Durchgangsloch der Klemme einschraubbaren Kontaktteil (7) und einem haubenartigen, mit einem Innengewinde (16) versehenen Betätigungsteil (8) besteht, das in Montageposition auf das Kontaktteil (7) aufgeschraubt ist und eine Anlagefläche für das Werkzeug hat,
- **daß** das Kontaktteil (7) als Hohlkörper mit einer zur Anlage an einem in der Klemme befindlichen elektrischen Leiter bestimmten Stirnfläche (10) ausgeführt ist, in dem mindestens eine quer zu seiner Achsrichtung verlaufende und rundum mit seiner Wandung (12) verbundene Scheibe (11) angeordnet ist, in welcher die Sollbruchstelle angebracht ist, welche als konzentrisch zur Achse des Kontaktteils (7) umlaufende Rille (14) ausgebildet ist,
- **daß** in dem Betätigungsteil (8) zentral ein dornartiges Druckstück (17) angebracht ist, das unter Einschluß eines umlaufenden Luftspalts (18) etwa konzentrisch zur Wandung des Betätigungsteils (8) verläuft und in Montageposition in Richtung des Kontaktteils (7) weist und
- **daß** das Kontaktteil (7) eine definierte, in Abhängigkeit von der mittels des Werkzeugs aufzubringenden Kraft bemessene Wandstärke hat, die zur Erzeugung des Festsitzes der Schraube (2) in der Klemme erforderlich ist und nach Erreichen des Festsitzes zum Abreißen des Kontaktteils (7) durch das Betätigungsteil (8) führt.

2. Klemmschraube nach Anspruch 1, **dadurch gekennzeichnet, daß** die radialen Abmessungen des Druckstücks (17) dem Durchmesser der Sollbruchstelle entsprechen.

3. Klemmschraube nach Anspruch 1, **dadurch gekennzeichnet, daß** in dem Kontaktteil (7) zwei mit Abstand und parallel zueinander verlaufende Scheiben (11,20) mit Sollbruchstellen angeordnet sind.

4. Klemmschraube nach einem der Ansprüche 1 bis 3, **dadurch gekennzeichnet, daß** in dem Druckstück (17) ein in axialer Richtung verlaufendes, von außen zugängliches Sackloch (19) mit polygonalem Querschnitt angebracht ist.
